# EUROPÄISCHE PATENTSCHRIFT

(11) **EP 1 070 633 B1**
(45) Veröffentlichungstag und Bekanntmachung des Hinweises auf die Patenterteilung: **29.11.2006**
(21) Anmeldenummer: 00114086.2
(22) Anmeldetag: 07.07.2000
(51) Int. Cl.: B60Q 1/26, F21V 9/08, F21V 19/00, F21S 8/10

(54) **Leuchte mit mehreren Lichtquellen**
Light with several light sources
Feux avec plusieurs sources de lumière

(30) Priorität: 19.07.1999 DE 19933713
(43) Veröffentlichungstag der Anmeldung: 24.01.2001
(73) Patentinhaber: Volkswagen Aktiengesellschaft, 38436 Wolfsburg (DE)
(72) Erfinder: Müller, Michael, 38518 Gifhorn (DE); Werner, Michael, 38106 Braunschweig (DE)

(56) Entgegenhaltungen:
- EP-A- 0 767 393
- FR-A- 663 429
- GB-A- 2 326 930
- US-A- 4 680 678
- PATENT ABSTRACTS OF JAPAN vol. 1995, no. 05, 30. Juni 1995 (1995-06-30) & JP 07 045102 A (STANLEY ELECTRIC CO LTD), 14. Februar 1995 (1995-02-14)

## Beschreibung

Die Erfindung betrifft eine Leuchte und insbesondere eine Heckleuchte mit mindestens einer ersten Lichtquelle, einer zweiten Lichtquelle, einer Lichtscheibe, die mindestens einen Durchlaßbereich aufweist, und einem Reflektor.

Allgemein sind Leuchten bekannt, die mehrere unabhängig voneinander ansteuerbare Lichtquellen umfassen. Dabei dient z.B. eine Lichtquelle der Richtungsanzeige, und eine weitere Lichtquelle dient als Bremsleuchte. Jede der Lichtquellen ist hinter einem definierten Durchlaßbereich der Lichtscheibe angeordnet, wobei die verschiedenen Durchlaßbereiche normalerweise unterschiedlich gefärbt sind. So ist der Bereich der Heckleuchte für die Fahrtrichtungsanzeige gelb gefärbt, und der Durchlaßbereich für das Bremslicht ist rot gefärbt.

Bei den genannten Leuchten besteht das Problem, daß verhindert werden muß, daß Licht der einen Lichtquelle auch durch den Durchlaßbereich der Lichtscheibe der jeweils anderen Lichtquelle aus der Leuchte tritt. Es darf also das Licht von der Lichtquelle für die Fahrtrichtungsanzeige nicht durch den roten Durchlaßbereich der Lichtscheibe für das Bremslicht hindurchtreten und umgekehrt. Das bedeutet aber zusätzlichen Aufwand bei der Herstellung der Leuchte und eine Einschränkung in Bezug auf die Möglichkeiten des Designs der Leuchte.

Aus der JP 07 045102 A ist eine Leuchtenanordnung (Oberbegriff von Anspruch 1) bekannt, bei der auf einer Zwischenscheibe lichtemittiende Dioden und Attrappen für lichtemittierende Dioden befestigt sind. Die Zwischenscheibe ist dabei zwischen einer Lichtquelle und einem Reflektor einerseits und einer Lichtscheibe andererseits angeordnet.

Aufgabe der vorliegenden Erfindung ist es, eine Leuchte und insbesondere eine Heckleuchte zu schaffen, die im Aufbau flexiblere Lösungen von Design-Anforderungen ermöglicht.

Diese Aufgabe wird durch eine Leuchte mit den Merkmalen nach Anspruch 1 gelöst. Bevorzugte Ausführungsformen der Erfindung sind Gegenstand der abhängigen Ansprüche.

Der Erfindung liegt die Idee zugrunde, die mehreren Lichtquellen in der Leuchte in verschiedenen Ebenen anzuordnen.

Die erfindungsgemäße Leuchte umfaßt mindestens eine erste Lichtquelle, eine Lichtscheibe, die mindestens einen Durchlaßbereich aufweist, einen Reflektor und eine zweite Lichtquelle, die auf einer transparenten Zwischenscheibe zwischen der mindestens ersten Lichtquelle und der Lichtscheibe angeordnet ist.

Erfindungsgemäß umfaßt die zweite Lichtquelle einen zweiten Reflektor, der in Bezug auf die zweite Lichtquelle gegenüber der Lichtscheibe angeordnet ist. Femer ist die zweiten Lichtquelle vorzugsweise durch einen Abstandhalter oder durch einen Glaskörper mit dem zweiten Reflektor verbunden.

Der zweite Reflektor ist in einer bevorzugten Ausführungsform so ausgestaltet, daß die mindestens eine erste Lichtquelle in der Projektion auf die Lichtscheibe von ihm überdeckt wird.

Ein Vorteil der erfindungsgemäßen Leuchte besteht darin, daß keine optisch störenden Elemente in der Leuchte vorgesehen werden müssen und die Leuchte so ästhetisch optimal gestaltet werden kann.

Weitere Merkmale und Vorteile der erfindungsgemäßen Leuchte ergeben sich aus der folgenden Beschreibung von zeichnerisch dargestellten Ausführungsformen der Erfindung.
- Fig. 1A und 1B: zeigen jeweils eine erste Ausführungsform der Erfindung im Querschnitt bzw. in Draufsicht.
- Fig. 2: zeigt eine weitere Ausführungsform der Erfindung im Querschnitt.

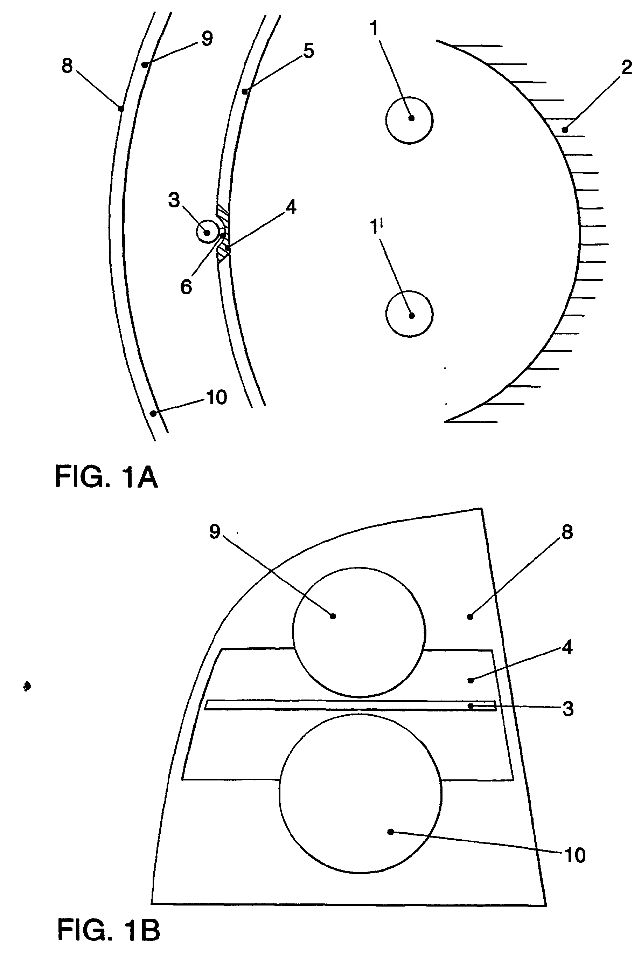

In Fig. 1A ist eine Leuchte im Querschnitt mit den wesentlichen Elementen eines Scheinwerfers dargestellt. Die Leuchte umfaßt mindestens eine erste Lichtquelle 1, insbesondere zwei erste Lichtquellen 1 und 1'. Bei den ersten Lichtquellen kann es sich sowohl um Glühfadenlampen als auch um LED-Einrichtungen handeln. Dies hängt von dem Einsatzbereich der Leuchte, den Kosten und der gewünschten Lebensdauer sowie der erforderlichen Lichtstärke der Leuchte ab.

Zur besseren Ausnutzung des abgestrahlten Lichtes weist die Leuchte insbesondere bei Glühfadenlampen als erster Lichtquelle 1, 1' mindestens einen Reflektor 2 auf. Der Reflektor kann wie dargestellt eine homogene Form aufweisen, er kann aber auch verschieden geformte Abschnitte umfassen, die in Form und Position jeweils auf die einzelnen Lichtquellen 1 bzw. 1' abgestimmt sind.

Die Leuchte wird auf der dem Reflektor 2 gegenüberliegenden Seite durch eine Lichtscheibe 8 begrenzt. Bei mehreren ersten Lichtquellen 1 und 1' weist diese Lichtscheibe 8 mehrere Durchlaßbereiche 9 und 10 auf, die sich gegenüber der jeweiligen ersten Lichtquelle 1, 1' befinden. Insbesondere sind die verschiedenen Durchlaßbereiche 9 und 10 wie oben erläutert unterschiedlich gefärbt.

Bei der Leuchte mit den genannten Elementen wie Lichtquelle 1, Reflektor 2 und Lichtscheibe 8 ist die Gestaltung der Leuchte engen Grenzen unterworfen, da vermieden werden muß, daß Licht der einen Lichtquelle durch den Durchlaßbereich, der der anderen Lichtquelle zugeordnet ist, aus der Leuchte nach außen tritt und dadurch u.U. ein "falsches" Signal an die anderen Verkehrsteilnehmer abgegeben wird.

Die erfindungsgemäße Leuchte umfaßt eine zweite Lichtquelle 3, die zwischen der mindestes ersten Lichtquelle 1, 1' und der Lichtscheibe 8 angeordnet ist. Mit anderen Worten, die zweite Lichtquelle 3 ist in einer Ebene angeordnet, die zwischen der oder den ersten Lichtquellen 1, 1' und der Lichtscheibe 8 liegt. Bei der erfindungsgemäßen Leuchte ist die zweite Lichtquelle 3 an einer transparenten Zwischenscheibe 5 befestigt, die in der Leuchte für die Abbildung des von den ersten Lichtquellen 1, 1' abgestrahlten Lichtes vorgesehen ist. Insbesondere kann es sich wie in Fig. 1A angedeutet bei der Zwischenscheibe um ein optisches Element 5 wie z.B. eine Walzenscheibe handeln, die auf mindestens einer Seite strukturiert ist und zur Strahlformung des Lichtes von der ersten Lichtquelle dient. Z.B. kann sie eine Sammelwirkung haben.

Zur besseren Ausnutzung des von der zweiten Lichtquelle 3 abgestrahlten Lichtes weist die erfindungsgemäße Leuchte zusätzlich einen zweiten Reflektor 4 für die zweite Lichtquelle 3 auf, der unmittelbar benachbart zur zweiten Lichtquelle 3 an der transparenten Zwischenscheibe 5 angeordnet ist. Der zweite Reflektor 4 kann eine Beschichtung des optischen Elements 5 in Höhe der zweiten Lichtquelle 3 oder eine Beschichtung der zweiten Lichtquelle 3 selbst sein.

Der Reflektor 4 kann aber ebensogut eine separate Einrichtung sein, die fest mit dem optischen Element 5 verbunden ist, die z.B. auf dem optischen Element 5 aufgeklebt ist.

Die zweite Lichtquelle 3 ist in der dargestellten Ausführungsform durch einen Abstandhalter 6 und über den zweiten Reflektor 4 mit dem optischen Element 5 verbunden. Der Abstandhalter 6 kann ein Clip sein, in den die zweite Lichtquelle 3 hinein gedrückt wird. Als Abstandhalter 6 kann aber auch eine schraubbare Verbindung verwendet werden. Darüber hinaus sind je nach Form der zweiten Lichtquelle 3 vorzugsweise mehrere Abstandhalter 6 nebeneinander auf dem optischen Element 5 vorgesehen, um der zweiten Lichtquelle eine stabile und definierte Lage in Bezug auf den zweiten Reflektor 4, das optischen Element 5 und die Lichtscheibe 8 zu geben.

Der Aufbau der Leuchte nach Fig. 1A ist in Fig. 1B in der Draufsicht gezeigt. Die zweite Lichtquelle 3 ist in der dargestellten Ausführungsform der Leuchte eine längliche Lichtquelle, insbesondere eine Leuchtstoffröhre. Sie erstreckt sich in der Projektion auf die Lichtscheibe 8 zwischen den zwei Durchlaßbereichen 9 und 10 der zwei ersten Lichtquellen 1, 1' (in Fig. 1B nicht dargestellt). Der zweite Reflektor 4 weist in der Gestaltung nach Fig. 1B Aussparungen dort auf, wo Licht von der ersten Lichtquelle 1 bzw. 1' die Lichtscheibe 8 durch den Durchlaßbereich 9 bzw. 10 verlassen soll. Es ist aber ebensogut denkbar, daß der erste bzw. zweite Durchlaßbereich 9 und 10 auf der Lichtscheibe 8 durch den zweiten Reflektor 4 in der Projektion auf die Lichtscheibe 8 überdeckt werden, d.h. die kreisförmigen Durchlaßbereiche 9 und 10 werden in der alternativen Ausführungsform zu einem Teil abgeschnitten, und der zweite Reflektor 4 erhält die Form eines Rechteckes oder eines Trapezes.

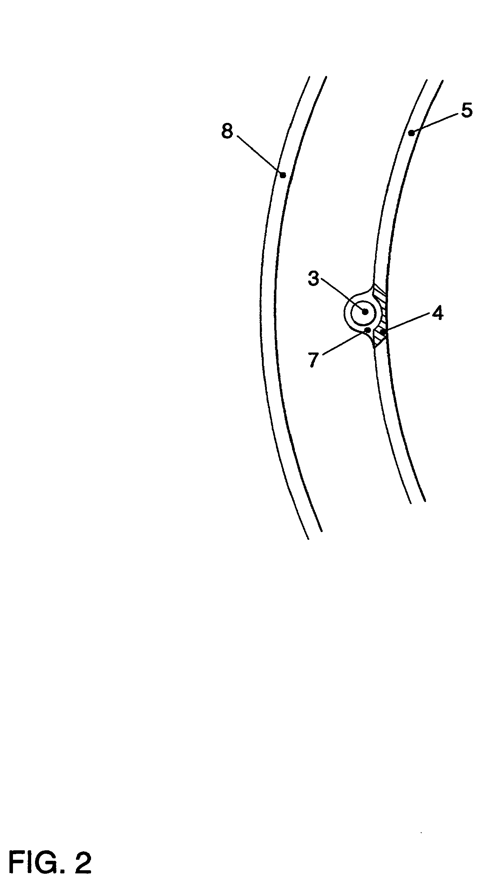

In Fig. 2 ist eine weitere Ausführungsform der erfindungsgemäßen Leuchte dargestellt. Bei dieser Ausführungsform ist die zweite Lichtquelle 3 durch einen Glaskörper 7 mit dem zweiten Reflektor 4 verbunden. Der Glaskörper 7 kann dabei insbesondere eine transparente Klebemasse sein, die sowohl die Verbindung der zweiten Lichtquelle mit dem Träger, hier das optische Element 5, sicherstellt als auch zur Strahlformung des abgestrahlten Lichtes dient.

### BEZUGSZEICHENLISTE

1 erste Lichtquelle, 1' erste Lichtquelle
2 erster Reflektor
3 zweite Lichtquelle
4 zweiter Reflektor
5 Wabenplatte/Walzenplatte
6 Abstandhalter zwischen der zweiten Lichtquelle und zweitem Reflektor
7 Glaskörper zwischen der zweiten Lichtquelle und zweitem Reflektor
8 Lichtscheibe
9 erster Durchlaßbereich der Lichtscheibe
10 zweiter Durchlaßbereich der Lichtscheibe

## Patentansprüche

1. Leuchte mit mindestens einer ersten Lichtquelle (1, 1'), einer Lichtscheibe (8), die mindestens einen Durchlaßbereich (9, 10) aufweist, einem Reflektor (2) und einer zweiten Lichtquelle (3), die auf einer transparenten Zwischenscheibe (5) zwischen der mindestes ersten Lichtquelle (1, 1') und der Lichtscheibe (8) angeordnet ist,
**dadurch gekennzeichnet, daß**
die zweite Lichtquelle (3) einen zweiten Reflektor (4) umfaßt, der in Bezug auf die zweite Lichtquelle (3) gegenüber der Lichtscheibe (8) angeordnet ist.

2. Leuchte nach Anspruch 1,
**dadurch gekennzeichnet, daß**
die zweite Lichtquelle (3) durch einen Abstandhalter (6) mit dem zweiten Reflektor (4) verbunden ist.

3. Leuchte nach Anspruch 1,
**dadurch gekennzeichnet, daß**
die zweite Lichtquelle (3) durch einen Glaskörper (7) mit dem zweiten Reflektor (4) verbunden ist.

4. Leuchte nach Anspruch 1,
**dadurch gekennzeichnet, daß**
der zweite Reflektor (4) die mindestens eine erste Lichtquelle (1, 1') in der Projektion auf die Lichtscheibe (8) überdeckt.

## Claims

1. Luminaire having at least one first light source (1, 1'), one lens (8) with at least one transparent region (9, 10), one reflector (2) and one second light source (3) which is arranged on a transparent intermediate cap (5) between the at least first light source (1, 1') and the lens (8), **characterized in that** the second light source (3) comprises a second reflector (4) which is arranged, relative to the second light source (3), opposite the lens (8).

2. Luminaire according to Claim 1, **characterized in that** the second light source (3) is connected to the second reflector (4) by means of a spacer (6).

3. Luminaire according to Claim 1, **characterized in that** the second light source (3) is connected to the second reflector (4) by means of a vitreous body (7).

4. Luminaire according to Claim 1, **characterized in that** the second reflector (4) covers the at least one first light source (1, 1') in the projection onto the lens (8).

## Revendications

1. Feu avec au moins une source de lumière (1, 1'), un verre de phare (8) qui présente au moins un zone de traversée (9, 10), un réflecteur (2) et une deuxième source de lumière (3), qui est disposée sur un verre intermédiaire transparent (5) entre ladite au moins une source de lumière (1, 1') et le verre de phare (8), **caractérisé en ce que** la deuxième source de lumière (3) comporte un deuxième réflecteur (4), qui est disposé en face du verre de phare (8) par rapport à la deuxième source de lumière (3).

2. Feu selon la revendication 1, **caractérisé en ce que** la deuxième source de lumière (3) est assemblée au deuxième réflecteur (4) par un élément d'écartement (6).

3. Feu selon la revendication 1, **caractérisé en ce que** la deuxième source de lumière (3) est assemblée au deuxième réflecteur (4) par un corps de verre (7).

4. Feu selon la revendication 1, **caractérisé en ce que** le deuxième réflecteur (4) recouvre ladite au moins une source de lumière (1, 1') dans la projection sur le verre de phare (8).
